# EUROPEAN PATENT APPLICATION

(11) **EP 2 741 248 A1**
(43) Date of publication of application: **11.06.2014**
(21) Application number: 13195314.3
(22) Date of filing: 02.12.2013
(51) Int. Cl.: G06Q 30/00, G06Q 30/02

(54) **Interactive consumer level servicing portal with per-use user payment**

(30) Priority: 04.12.2012 US 201213693917
(71) Applicant: Palo Alto Research Center Incorporated, Palo Alto, California 94304 (US)
(72) Inventor: Roberts, Michael, Los Gatos, CA 95033 (US)
(74) Representative: Lord, Michael

(57) **Abstract**

One embodiment of the present invention provides a system for helping a consumer to solve a problem associated with a product. During operation, the system receives, via a web portal, a description of the problem from the consumer; generates a list of experts based on the description of the problem; receives a selection of an expert based on the list from the consumer; and establishes a online session between the consumer and the selected expert, thereby facilitating the expert in helping the consumer to solve the problem.

## Description

### BACKGROUND

### Field

This disclosure is generally related to a system for providing interactive technical support to consumers. More specifically, this disclosure is related to a web-based servicing portal that allows consumers to receive support by remote interaction with a technician and charges the consumers on a per-use basis.

### Related Art

Websites that provide online assistance to consumers in solving problems related to devices and machinery, from cars to cell phones, are increasingly popular. For example, the website fixya.com allows a user to submit a problem, usually in the form a textual description, perhaps accompanied by a picture, to the site. The posted problems are viewed by other users of the site, some of which may submit solutions to the problem. The solutions are then ranked by users of the site, so that the best solutions are displayed. Such websites lack the ability to enable real-time interaction between an expert and the consumer.

### SUMMARY

One embodiment of the present invention provides a system for helping a consumer to solve a problem associated with a product. During operation, the system receives, via a web portal, a description of the problem from the consumer; generates a list of experts based on the description of the problem; receives a selection of an expert based on the list from the consumer; and establishes an online session between the consumer and the selected expert, thereby facilitating the expert in helping the consumer to solve the problem.

In a variation on this embodiment, the system further uploads a 3-dimensional (3-D) model associated with the product, receives commands that change an appearance of the 3-D model, and updates the 3-D model based on the received commands.

In a further variation, the commands are received from at least one of: the consumer and the expert.

In a variation on this embodiment, the list further comprises rankings associated with the experts.

In a variation on this embodiment, the system receives, from a second expert, a solution for the problem. In response to displaying the solution to a consumer, the system makes a payment to the second expert.

In a further variation, the solution is displayed on a web page that comprises advertisements, and the payment to the second expert is determined based on revenue associated with the advertisements.

In a further variation, the solution includes an animation constructed based on a 3-D model.

In a variation on this embodiment, the system determines a time duration of the online session, receives a first payment from the consumer based on the time duration, and makes a second payment to the expert based on the time duration.

### BRIEF DESCRIPTION OF THE FIGURES

FIG. 1 presents a diagram illustrating an exemplary computing environment in accordance with an embodiment of the present invention.
FIG. 2 presents a diagram illustrating an exemplary web-based servicing server, in accordance with an embodiment of the present invention.
FIG. 3 presents a time-space diagram illustrating an exemplary web-based servicing session, in accordance with an embodiment of the present invention.
FIG. 4 presents a flowchart illustrating an exemplary process of an expert providing content to a servicing system, in accordance with an embodiment of the present invention.
FIG. 5 illustrates an exemplary computer system for web-based servicing, in accordance with one embodiment of the present invention.

In the figures, like reference numerals refer to the same figure elements.

### DETAILED DESCRIPTION

The following description is presented to enable any person skilled in the art to make and use the embodiments, and is provided in the context of a particular application and its requirements. Various modifications to the disclosed embodiments will be readily apparent to those skilled in the art, and the general principles defined herein may be applied to other embodiments and applications without departing from the spirit and scope of the present disclosure. Thus, the present invention is not limited to the embodiments shown, but is to be accorded the widest scope consistent with the principles and features disclosed herein.

### Overview

Embodiments of the present invention provide a web-based system for providing consumer assistance in solving daily problems related to their devices or machinery. The system includes a model library, which stores 3-dimensional (3-D) models for various consumer products and animated service procedures associated with those products. During operation, a user and a service technician can chat online and collaboratively select and manipulate the 3-D models. The system also includes a compensation mechanism that can charge a fee to the consumer and provide a payment to the service technician on a per-user basis.

In this disclosure, the term "user" refers to people who use the online servicing web portal, which can be a consumer seeking help or an expert providing help to the consumer via the web portal.

### The Online Servicing Web Portal

Recently emerged websites for providing online help to consumers with machinery problems often provide limited or no interaction between a consumer seeking help and an expert providing help. Specifically, a consumer seeking solutions for his machinery problem from such a website can start by searching the website for an existing solution (often in textual form) to the problem. The search may be performed using a hierarchical index or via tags and keywords. For example, a consumer searching solutions for his leaking kitchen faucet may enter a number of keywords that include the word "leak" and the manufacturer and model of the faucet. If no solution is found, the consumer can upload a textual description of the problem, perhaps accompanied by a picture, to the website. Along with the problem description, tags can be added (either by the consumer or the website) to describe the problem; the tags are often categorized by manufacturer and model.

The posted problems are then presented to other users of the website by either being displayed to forums associated with the specified equipment (in the faucet example, the problem will be posted in a forum where users discuss problems associated with faucets), or being displayed on the front page of the website. Some websites send out email notifications to their members announcing the problem. Site members can then respond to the problem by posting solutions (often in textual form or at most accompanied by a picture or video clip). The consumer the solution and other members with a similar problem may rank the posted solutions, so that the best solutions are displayed. The website also allows users to be ranked according to solutions provided by them. Note that such websites have limitations because the questions and answers to a problem are often posted asynchronously, with little or no interaction provided between the consumer and the expert. Hence, a consumer seeking help with a very complex machinery problem, such as how to fix a car engine, may find it difficult to obtain step-by-step instructions, or he may find the instructions from an expert difficult to follow. Moreover, existing websites often do not have a payment or reward mechanism that can provide monetary compensation to the solution providers on a per-use basis.

To solve these problems, embodiments of the present invention provide a web-based servicing system that enables real-time chat between a consumer and an expert. During the live chat, the consumer and the expert can collaboratively select and manipulate a 3-D model of the involved product, thus making it possible for the expert to provide detailed step-by-step instruction to the consumer. The system also includes a compensation mechanism that charges the consumer and compensates the expert on a per-use basis.

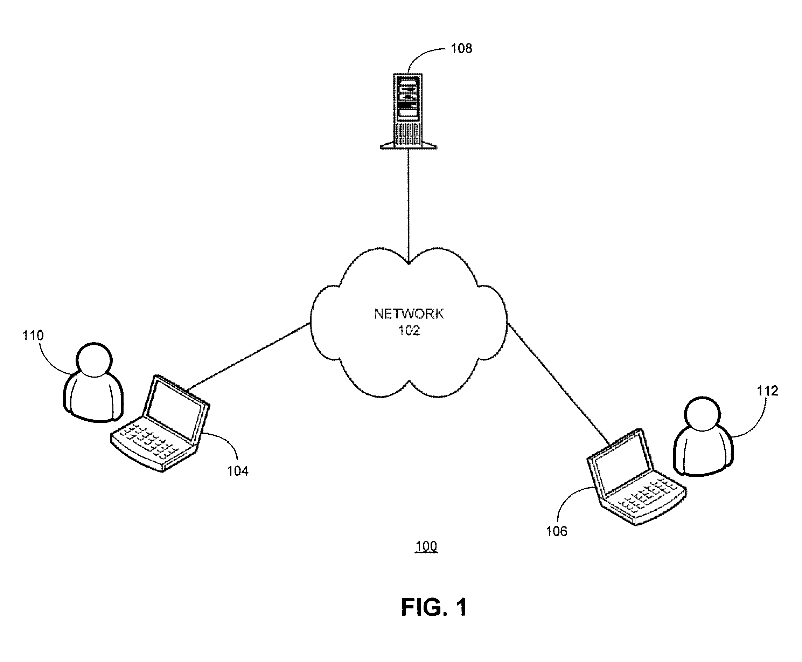

FIG. 1 presents a diagram illustrating an exemplary computing environment in accordance with an embodiment of the present invention. Computing environment 100 can generally include any type of computer system, including but not limited to, a computer system based on a microprocessor, a mainframe computer, a digital signal processor, a portable computing device, a personal organizer, a device controller, and a computational engine within an appliance. In the example illustrated in FIG. 1, computing environment 100 includes a network 102, clients 104 and 106, and a web-based servicing server 108.

Network 102 can generally include any type of wired or wireless communication channel capable of coupling together computing nodes. This includes, but is not limited to, a local area network, a wide area network, or a combination of networks. In one embodiment of the present invention, network 102 includes the Internet.

Clients 104 and 106 can generally include any nodes on a network with computational capability and a mechanism for communicating across the network. Web-based servicing server 108 includes any computational node with a mechanism for providing web-based service to a client. Users of clients 104 and 106 can access web-based servicing server 108 via network 102. For example, a user 110 of client 104 can search for a solution for a machinery problem on web-based servicing server 108. In one embodiment, user 110 performs such a search via a website hosted by web-based servicing server 108. Moreover, web-based servicing server 108 can facilitate interaction between user 110 and a user 112 of client 106. In one embodiment, such interaction can include a real-time online interaction that involves collective manipulation of a 3-D model. For example, using a web interface provided by web-based servicing server 108, user 110 can have a real-time online chat with user 112. During the online chat session, user 112 can manipulate a 3-D model of a device to provide step-by-step instructions for solving a problem associated with the device.

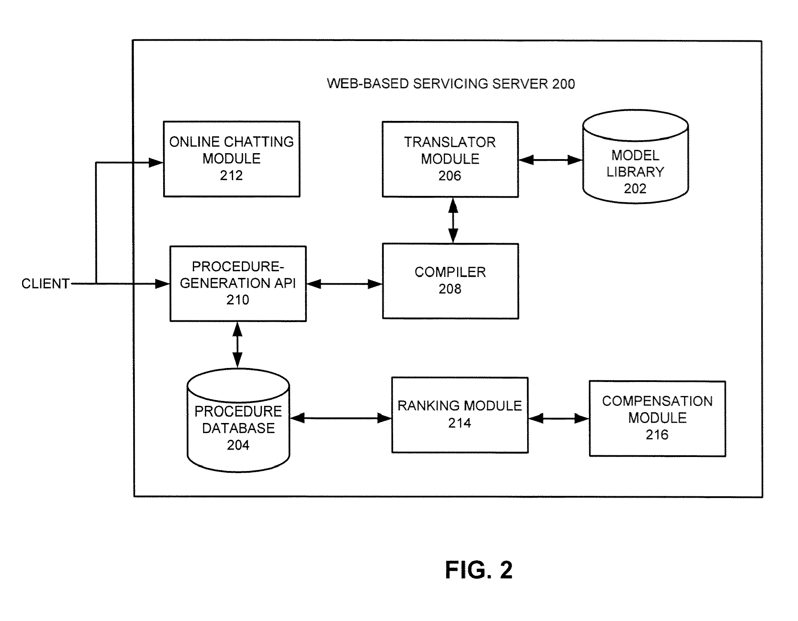

FIG. 2 presents a diagram illustrating an exemplary web-based servicing server, in accordance with an embodiment of the present invention. Web-based servicing server 200 includes a model library 202, a procedure database 204, a translator module 206, a compiler 208, a procedure-generation API210, an online chatting module 212, a ranking module 214, and a compensation module 216.

Model library 202 stores digital models associated with various consumer products, such as cameras, computers, TVs, toaster ovens, cars, etc. In one embodiment, the models can include 3-D models, such as a 3-D computer-aided design (CAD) model of a product. In a further embodiment, the models include a 3-D virtual environment, such as virtual reality. The 3-D model of a product can include topography information and spatial relationships associated with different components of the product. The models can be provided by the manufacturers of the products or by users. For example, a consumer seeking solution to a problem may upload a 3-D model of the associated product; or an expert providing a solution to the problem may upload the 3-D model. In one embodiment, users can upload product models at client computers via a web user interface (WUI). Model library 202 can index available models based on manufacturer and model numbers.

Procedure database 204 stores servicing procedures, which can include solutions to "frequently asked questions." Furthermore, an expert may also want to upload a step-by-step animated servicing procedure, such as a step-by-step guide for servicing a car engine, to procedure database 204.

Translator module 206 is responsible for converting the models stored in model library 202 to an internal format with known layout of parts, along with metadata which describes constraints on how the different components of a product may be moved relative to each other.

Compiler 208 is responsible for generating a JavaScript program, which encapsulates both the geometry of a 3-D model of a product, and also the movement constraints imposed on components of the product. In one embodiment, the generated javascript can utilize WebGL for the display portions of the script, optionally downloading geometry files from a remote location. The output of compiler 208 (in the form of JavaScript) can be downloaded to the browser-based client.

Procedure-generation API 210 interfaces with a web-based client application running on the client machine. The client application allows a user to tag components within a 3-D model and create animated procedures related to the components. For example, a procedure for fixing a jammed multi-function printing device may involve an operation of removing a paper tray. In a conventional service manual, this operation may be described using text or 2-D pictures. In embodiments of the present invention, to demonstrate such an operation, an expert can visually indicate which one of the multiple trays needs to be removed using the 3-D model. For example, the expert can click on the appropriate tray on the 3-D model in the virtual environment presented by the client application, which results in the corresponding paper tray being highlighted. The animated procedure based on a 3-D model is much more effective than textual descriptions (even with the assistance of 2-D pictures) in explaining the procedure. Other than 3-D models, such as a 3-D CAD model, the procedures can also be generated using annotated videos. For example, an expert may add annotations on top of a video stream showing the entire process of servicing a car engine. The annotations can include textual descriptions and other graphic elements, such as circles, boxes, arrows, etc., that can assist in the explanation of a service procedure. The generated procedures can be uploaded to procedure database 204 via procedure-generation API 210. Moreover, a procedure guide may include a text document that describes a procedure, such as a conventional product manual. When generating the 3-D procedure guide, an expert user can insert links into the text document that can couple or associate certain textual information (such as a component name) with an animated procedure.

Online chatting module 212 allows users to chat online and collaboratively select and manipulate a 3-D model, either obtained from model library 202 or instantly uploaded by a user. In one embodiment, the appearance of the 3-D model changes based on the user (either the consumer or the expert) command. For example, a consumer seeking help for a jammed printer may chat real-time with a printer technician. During the chat session, the consumer and the technician can collectively manipulate a 3-D CAD model of the printer, such as changing the perspective or orientation of the 3-D model in the virtual environment, or changing the position of a component. When tags are used in the 3-D model, users may add new tags or modify existing tags. For example, an expert user may add or modify a tag associated with a paper tray in order to demonstrate a tray-removing operation.

Ranking module 214 is responsible for ranking the graphical service procedures (either animated or annotated) according to their usefulness to the users. In one embodiment, users of web-based servicing server 200 can rank procedures stored in procedure database 204 based on the usefulness of these procedures. In a further embodiment, ranking module 214 also ranks the experts that are available for providing online help to consumers based on a number of factors, including but not limited to: credentials, past experience, and consumer feedback.

Compensation module 216 is responsible for providing monetary compensation to users. In one embodiment, compensation module 216 links a consumer with an expert, who provides online help for solving a machinery problem, for a fee. For example, the expert may receive a payment, which can be based on the length of time he spends with the consumer or a flat payment. The entity or the website that facilitates the web-based servicing session (via web-based servicing server 200) can also make money by taking a small percentage of the fee charged to the consumer. In addition, the website can also obtain advertising revenues as most commercial websites do nowadays. In a further embodiment, compensation module 216 obtains expert ranking results from ranking module 214. For example, a consumer seeking solution to his machinery problem may be presented with a list, showing currently available experts, their ranks, and fees they would charge for the service. The consumer can then select one expert to start the online servicing session.

In addition to providing monetary compensation to experts when they provide online service to consumers, compensation module 216 also provides monetary compensation to the experts for the content (such as animated procedures) they have uploaded into the system. For example, an expert uploads a procedure guide for servicing a car engine to procedure database 204, and receives a payment each time a consumer views the procedure guide, or receives a percentage of advertising revenue from the web page illustrating the guide. Note that unlike conventional knowledge-based websites, embodiments of the present invention include a compensation mechanism that provides monetary incentives to users for uploading content.

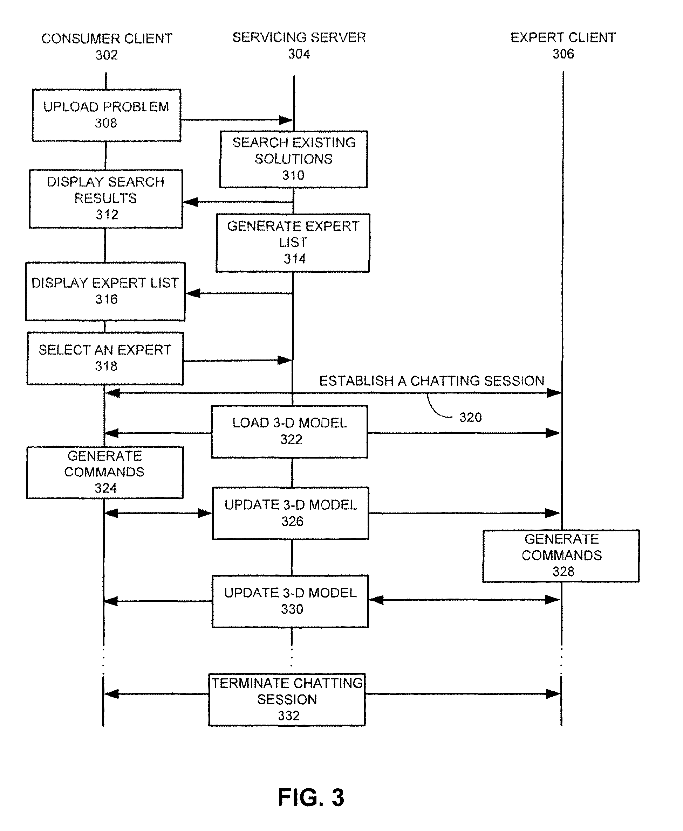

FIG. 3 presents a time-space diagram illustrating an exemplary web-based servicing session, in accordance with an embodiment of the present invention. During operation, a consumer client uploads a description of a machinery problem to a servicing server 304 (operation 308). In one embodiment, the servicing server runs a web portal where the consumer can upload the problem description. The problem description usually is in the form of a textual description, sometimes accompanied by pictures. In a further embodiment, the consumer or the web portal can insert tags that facilitate categorization of the problem. For example, tags regarding the make and model of the product can be inserted into the problem description, which can then be categorized accordingly. Other keywords associated with the problem, such as names of the malfunctioning components, can also be tagged to describe the problem.

Upon receiving the problem description, a search is performed at servicing server 304 for existing solutions to the problem (operation 310). The solutions can include animated procedure guide. In one embodiment, the previously inserted tags can be used to assist the search. In one embodiment, the consumer manually enters keywords for the search. The search results are then displayed at consumer client 302 (operation 312). In a further embodiment, a smart object, such as a car with an on-board diagnostics system, can upload information to the search functionality directly.

Based on the problem description, servicing server 304 generates an expert list, which lists experts currently available for online assistance (operation 314). In one embodiment, generating the list of experts involves performing a search in an expert database. The search query can the same as the search query used for searching the solutions. The expert list is then displayed at consumer client 302 (operation 316). In one embodiment, the displayed expert list also includes the ranking of the experts along with their charge rate. The additional information can help the consumer to select an expert.

The consumer then makes an expert selection at consumer client 302 (operation 318). Accordingly, servicing server 304 establishes an online chatting session, thus an online servicing session, between a corresponding expert client 306 and consumer client 302 (operation 320). During the chatting, servicing server 304 loads a 3-D model, such as a 3-D CAD model, into a virtual reality that can be viewed by the consumer at consumer client 302 and the expert at expert client 306 (operation 322). The 3-D model can be collaboratively manipulated by the consumer and the expert, thus making it easier for the expert to explain the procedure.

During the online chatting (servicing) session, the consumer can generate commands that change the appearance of the 3-D model at consumer client 302 (operation 324). For example, to better explain his problem, a consumer may want to highlight a component in the 3-D model of the product, or he can change the view angle of the model in the virtual reality. The commands cause servicing server 304 to update the 3-D model to be displayed at both consumer client 302 and expert client 306 (operation 326). Similarly, the expert can also manipulate the 3-D model by generating commands at expert client 306 (operation 328). For example, to better explain a service procedure, the expert may want to move the position of a component in the 3-D model of the product, such as pulling out a paper tray of a printer. In response to such commands, servicing server 304 updates the 3-D model (operation 330). During a particular chatting session, the consumer and the expert may repeat the operations of updating the 3-D model until the expert has sufficiently explained the service procedure to the consumer; then, servicing server 304 terminates the online chatting session (operation 332). In some embodiments, at the end of the chatting session, servicing server 304 receives a payment from the consumer and makes a payment to the expert.

In some embodiments, consumer client 302 and expert client 306 are client computers that interact with servicing server 304 in a client-server architecture. A given client computer may include one or more software applications that are resident on and which execute on the given client computer. A particular software application may be a stand-alone program or may be embedded in another software application. Alternatively, the software application may be a software-application tool that is embedded in a web page (e.g., the software application may execute in a virtual environment provided by a web browser).

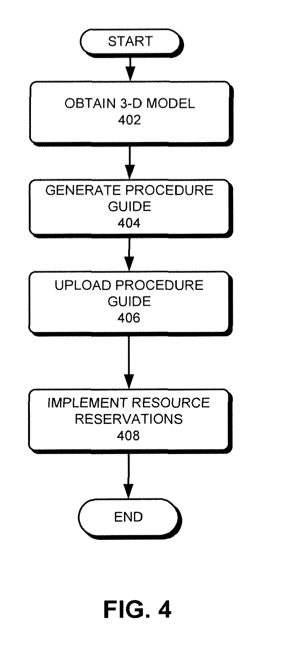

FIG. 4 presents a flowchart illustrating an exemplary process of an expert providing content to a servicing system, in accordance with an embodiment of the present invention. During operation, an expert willing to upload a procedure guide associated with a product into the online servicing system can obtain a 3-D model of the product (operation 402). Using the 3-D model, the expert can generate an animated procedure guide (operation 404). In one embodiment, the expert can generate the procedure guide using a web-based application running on a client machine. In a further embodiment, the procedure guide may include a text-based manual embedded with links that can be linked to an animated procedure. Subsequently, the expert uploads the procedure guide into the online servicing system (operation 406). In one embodiment, the online servicing system stores the procedure guide into a procedure database, which can later be searched by a consumer. Once the procedure guide is in the online servicing system, the expert can receive a one-time payment, a payment each time a consumer views the guide, or a portion of the advertising revenue for the web page displaying his guide (operation 408).

### Computer System

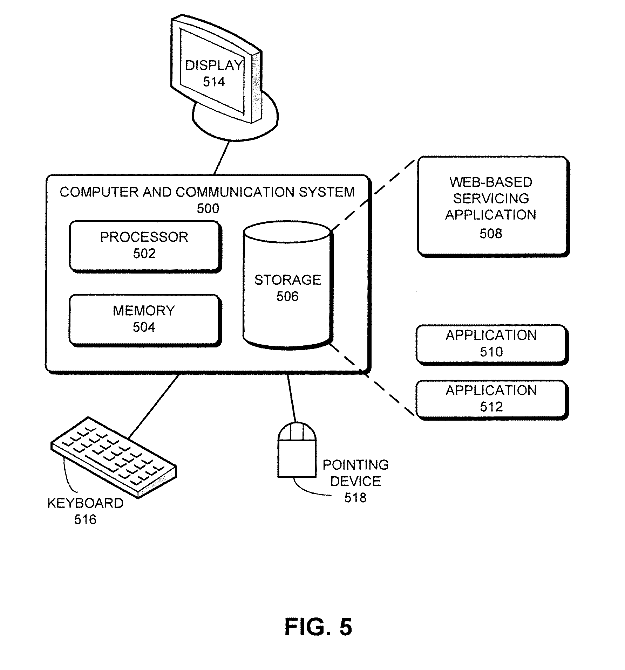

FIG. 5 illustrates an exemplary computer system for web-based servicing, in accordance with one embodiment of the present invention. In one embodiment, a computer and communication system 500 includes a processor 502, a memory 504, and a storage device 506. Storage device 506 stores a web-based servicing application 508, as well as other applications, such as applications 510 and 512. During operation, web-based servicing application 508 is loaded from storage device 506 into memory 504 and then executed by processor 502. While executing the program, processor 502 performs the aforementioned functions. Computer and communication system 500 is coupled to an optional display 514, keyboard 516, and pointing device 518.

The data structures and code described in this detailed description are typically stored on a computer-readable storage medium, which may be any device or medium that can store code and/or data for use by a computer system. The computer-readable storage medium includes, but is not limited to, volatile memory, non-volatile memory, magnetic and optical storage devices such as disk drives, magnetic tape, CDs (compact discs), DVDs (digital versatile discs or digital video discs), or other media capable of storing computer-readable media now known or later developed.

The methods and processes described in the detailed description section can be embodied as code and/or data, which can be stored in a computer-readable storage medium as described above. When a computer system reads and executes the code and/or data stored on the computer-readable storage medium, the computer system performs the methods and processes embodied as data structures and code and stored within the computer-readable storage medium.

Furthermore, methods and processes described herein can be included in hardware modules or apparatus. These modules or apparatus may include, but are not limited to, an application-specific integrated circuit (ASIC) chip, a field-programmable gate array (FPGA), a dedicated or shared processor that executes a particular software module or a piece of code at a particular time, and/or other programmable-logic devices now known or later developed. When the hardware modules or apparatus are activated, they perform the methods and processes included within them.

The foregoing descriptions of various embodiments have been presented only for purposes of illustration and description. They are not intended to be exhaustive or to limit the present invention to the forms disclosed. Accordingly, many modifications and variations will be apparent to practitioners skilled in the art. Additionally, the above disclosure is not intended to limit the present invention.

## Claims

1. A computer-executable method, the method comprising:
receiving, at a server via a web portal, a description of a problem associated with a product from a consumer;
generating a list of experts based on the description of the problem;
receiving a selection of an expert based on the list; and
establishing an online session between the consumer and the selected expert, thereby facilitating the expert in helping the consumer to solve the problem.

2. The method of claim 1, further comprising:
uploading a 3-dimensional (3-D) model associated with the product;
receiving commands that change an appearance of the 3-D model; and
updating the 3-D model based on the received commands.

3. The method of claim 2, wherein the commands are received from at least one of:
the consumer; and
the expert.

4. The method of any of the preceding claims, wherein the list further comprises rankings associated with the experts.

5. The method of any of the preceding claims, further comprising:
receiving, from a second expert, a solution for the problem; and
in response to displaying the solution to a consumer, making a payment to the second expert.

6. The method of claim 5, wherein the solution is displayed on a web page that comprises advertisements, and wherein the payment to the second expert is determined based on revenue associated with the advertisements.

7. The method of claim 5, wherein the solution includes an animation constructed based on a 3-dimensional (3-D) model.

8. The method of any of the preceding claims, further comprising:
determining a time duration of the online session;
receiving a first payment from the consumer based on the time duration; and
making a second payment to the expert based on the time duration.

9. A computer-readable storage medium storing instructions that when executed by a computer cause the computer to perform the method according to any of the preceding claims.

10. A server for a web portal, comprising:
a receiving mechanism configured to receive, via the web portal, a description of a problem associated with a product from a consumer;
a generation mechanism configured to generate a list of experts based on the description of the problem;
an expert-selection receiving mechanism configured to receive a selection of an expert based on the list; and
an online chatting module configured to establish an online chat session between the consumer and the selected expert, thereby facilitating the expert in helping the consumer to solve the problem.

11. The server of claim 10, further comprising:
a model-uploading mechanism configured to upload a 3-dimensional (3-D) model associated with the product;
a command-receiving mechanism configured to receive commands that change an appearance of the 3-D model; and
a model-updating mechanism configured to update the 3-D model based on the received commands.

12. The server of claim 10 or claim 11, wherein the list further comprises rankings associated with the experts.

13. The server of any of claims 10 to 12, further comprising:
a solution-receiving mechanism configured to receive, from a second expert, a solution for the problem;
a displaying mechanism configured to display the solution to a consumer; and
a compensation mechanism configured to, in response to the displaying mechanism displaying the solution to the consumer, make a payment to the second expert.

14. The server of any of claim 13, wherein the display mechanism is further configured to display advertisements while displaying the solution, and wherein while making the payment to the second expert, the compensation mechanism is further configured to calculate revenue associated with the advertisements.

15. The server of any of claims 10 to 14, further comprising a payment module configured to:
determine a time duration of the online session;
receive a first payment from the consumer based on the time duration; and
make a second payment to the expert based on the time duration.
